(19) Europäisches Patentamt
European Patent Office
Office européen des brevets

(11) **EP 2 845 646 A2**

(12) **EUROPEAN PATENT APPLICATION**

(43) Date of publication:
**11.03.2015 Bulletin 2015/11**

(51) Int Cl.:
**B01J 29/00** (2006.01)   **B01J 35/04** (2006.01)
**B01J 37/00** (2006.01)   **B01D 53/94** (2006.01)
**C04B 38/00** (2006.01)   B01J 29/76 (2006.01)
B01J 29/85 (2006.01)   C04B 111/00 (2006.01)

(21) Application number: **14181753.6**

(22) Date of filing: **21.08.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.08.2013 JP 2013175927**

(71) Applicant: **Ibiden Co., Ltd.**
**Ogaki-shi**
**Gifu 503-8604 (JP)**

(72) Inventors:
- **Sato, Masaya**
  **Gifu, 501-0695 (JP)**
- **Umemoto, Takehiro**
  **Gifu, 501-0695 (JP)**
- **Onaya, Naoki**
  **Gifu, 501-0695 (JP)**

(74) Representative: **Hoffmann Eitle**
**Patent- und Rechtsanwälte PartmbB**
**Arabellastraße 30**
**81925 München (DE)**

(54) **Honeycomb catalyst and exhaust gas purifying apparatus**

(57) The present invention provides a honeycomb catalyst that is excellent in NOx purifying performance and is capable of suppressing damage of a honeycomb unit during use of an exhaust gas purifying apparatus. The honeycomb catalyst of the present invention includes a honeycomb unit with a plurality of through holes that are arranged in parallel in a longitudinal direction and partitions that are provided between the through holes, wherein the honeycomb unit includes a first zeolite, a second zeolite, and an inorganic binder; the first zeolite is a CHA-structured aluminosilicate having a Si/Al ratio of 15 to 50; the second zeolite is a silicoaluminophosphate having a Si/(Si + Al + P) ratio of 0.1 to 0.25; and the volume ratio of the first zeolite to the second zeolite (first zeolite:second zeolite) is 75:25 to 90:10.

FIG. 1

EP 2 845 646 A2

**Description**

TECHNICAL FIELD

The present invention relates to a honeycomb catalyst and an exhaust gas purifying apparatus.

BACKGROUND ART

Selective catalytic reduction (SCR) system is a known technology to purify exhaust gas from automobiles using ammonia to reduce NOx to nitrogen and water.
Zeolite-containing compositions molded into honeycomb shapes are known to be used as catalyst supports in the SCR system.
For example, Patent Literature 1 discloses a honeycomb structured body which includes a honeycomb unit including a first zeolite, a second zeolite, and an inorganic binder, wherein the first zeolite is at least one of a β-zeolite and a ZSM-5 zeolite; and the second zeolite is a phosphate zeolite such as SAPO. In the honeycomb structured body of Patent Literature 1, the first zeolite (e.g., β-zeolite) is present around the second zeolite (e. g. , SAPO), and the second zeolite absorbs and desorbs water. This structure suppresses expansion or contraction of the honeycomb unit.
Patent Literature 2 discloses a CHA-structured zeolite that is ion-exchanged with a copper ion as a zeolite catalyst for the SCR system. Patent Literature 2 says that the zeolite catalyst described therein exerts higher NOx purifying performance after it is aged with hot water.

CITATION LIST

- Patent Literature

Patent Literature 1: WO 2011/061835
Patent Literature 2: US Patent No. 7601662

SUMMARY OF INVENTION

- Technical Problem

In order to manufacture a honeycomb catalyst having excellent NOx purifying performance, the present inventors have conceived of molding a composition that contains a CHA-structured zeolite (hereinafter, also referred to as CHA-type zeolite), such as those described in Patent Literature 2, into a honeycomb shape.
It is found, however, that, if a honeycomb catalyst is manufactured using a honeycomb unit that includes a CHA-type zeolite, and an exhaust gas purifying apparatus equipped with the honeycomb catalyst is mounted in a vehicle, unfortunately the honeycomb unit is damaged by cracks occurring during use.
The present invention is devised to solve the aforementioned problem, and aims to provide a honeycomb catalyst and an exhaust gas purifying apparatus which are excellent in NOx purifying performance and are capable of suppressing damage of the honeycomb unit during use of the exhaust gas purifying apparatus.

- Solution to Problem

The present inventors studied the cause of damage of the honeycomb unit during use of the exhaust gas purifying apparatus. As a result, they have found that the honeycomb unit is damaged when it expands due to the CHA-type zeolite absorbing water or is damaged by capillary stress caused when water enters into the pores of the honeycomb unit.
In view of the above study result, the present inventors have found that a honeycomb unit manufactured by mixing a CHA-structured aluminosilicate and a silicoaluminophosphate not only has sufficient NOx purifying performance but also is less likely to be damaged during use of the exhaust gas purifying apparatus. Accordingly, the inventors completed the present invention.
Specifically, the honeycomb catalyst of the present invention includes a honeycomb unit with a plurality of through holes that are arranged in parallel in a longitudinal direction and partitions that are provided between the through holes, wherein the honeycomb unit includes a first zeolite, a second zeolite, and an inorganic binder; the first zeolite is a CHA-structured aluminosilicate having a Si/Al ratio of 15 to 50; the second zeolite is a silicoaluminophosphate having

2

a Si/{Si + Al + P} ratio of 0.1 to 0.25; and the volume ratio of the first zeolite to the second zeolite (first zeolite:second zeolite) is 75:25 to 90:10.

In the honeycomb catalyst of the present invention, the honeycomb unit formed mainly of a CHA-structured aluminosilicate (hereinafter, also referred to as CHA), which is the first zeolite, can improve the NOx purifying performance. Moreover, the addition of the CHA and a silicoaluminophosphate (hereinafter also referred to as SAPO), which is the second zeolite, for forming the honeycomb unit enables to reduce the stress from absorption or desorption of water in the entire honeycomb unit. If the volume ratio of the CHA exceeds 90, displacement due to absorption or desorption of water may damage the honeycomb unit. Since the CHA has a coefficient of thermal expansion of $-4.5 \times 10^{-6}$/K or less, the honeycomb unit may be damaged by thermal stress. If the volume ratio of the CHA is less than 75, the amount of the SAPO is relatively high. Thus, similarly to the above, the honeycomb unit may be damaged by the stress due to contraction upon absorption of water and expansion upon desorption of water.

Based on the above, the present inventors have found that controlling the volume ratio of the CHA to the SAPO to 75:25 to 90:10 enables to provide a honeycomb catalyst which is excellent in NOx purifying performance and is capable of suppressing damage (damage due to absorption or desorption of water and thermal stress) of the honeycomb unit during use of the exhaust gas purifying apparatus.

The first zeolite preferably has an average particle size of 0.1 to 2.0 $\mu$m. The first zeolite having an average particle size of 0.1 to 2.0 $\mu$m allows the honeycomb unit to have a large pore size. Thus, a capillary stress upon absorption of water can be reduced. Also, higher NOx purifying performance due to gas diffusion can be achieved.

The average particle size of the second zeolite is preferably 1/5 to 50 times the average particle size of the first zeolite. This enables control of the pore size of the honeycomb unit.

At least one of the first zeolite and the second zeolite is preferably ion-exchanged with a copper ion. This can improve the NOx purifying performance.

The honeycomb unit preferably contains the copper ion in an amount of 5.5 to 7.5 g per liter of an apparent volume of the honeycomb unit. The above copper ion content enables not only high NOx purifying performance when the temperature of exhaust gas is low but also prevention of a decrease of the NOx purifying performance due to oxidation of ammonia when the temperature of exhaust gas is high. Thus, the honeycomb unit exerts high NOx purifying performance over the entire temperature range.

The honeycomb unit includes the first zeolite preferably in an amount of 150 to 250 g per liter of an apparent volume of the honeycomb unit. The above first zeolite content enables not only high NOx purifying performance when the temperature of exhaust gas is low but also prevention of a decrease of the NOx purifying performance due to oxidation of ammonia when the temperature of exhaust gas is high. Thus, the honeycomb unit exerts high NOx purifying performance over the entire temperature range.

The honeycomb unit preferably further includes at least one selected from the group consisting of an inorganic fiber, a scale-like material, a tetrapod-shaped material, and a three-dimensional needle-shaped material. This can increase the strength of the honeycomb catalyst.

The exhaust gas purifying apparatus of the present invention includes the honeycomb catalyst of the present invention.

- Advantageous Effects of Invention

The present invention enables to provide a honeycomb catalyst and an exhaust gas purifying apparatus which are excellent in NOx purifying performance and are capable of suppressing damage of the honeycomb unit during use of the exhaust gas purifying apparatus.

BRIEF DESCRIPTION OF DRAWINGS

Fig. 1 is a perspective view schematically illustrating one example of the honeycomb catalyst of the present invention.
Fig. 2 is a perspective view schematically illustrating one example of the exhaust gas purifying apparatus of the present invention.
Fig. 3 is a perspective view schematically illustrating another example of the honeycomb catalyst of the present invention.
Fig. 4 is a perspective view schematically illustrating one example of a honeycomb unit included in the honeycomb catalyst shown in Fig. 3.
Fig. 5 is a graph showing the rate of temperature-dependent change in the coefficient of thermal expansion of the honeycomb units manufactured in examples and comparative examples.

DESCRIPTION OF EMBODIMENTS

The present invention will now be specifically described below but is not limited to the described embodiment. These embodiments may be appropriately modified to an extent not changing the gist of the present invention.

The honeycomb catalyst of the present invention includes a honeycomb unit with a plurality of through holes that are arranged in parallel in a longitudinal direction and partitions that are provided between the through holes, wherein the honeycomb unit includes a first zeolite, a second zeolite, and an inorganic binder; the first zeolite is a CHA-structured aluminosilicate having a Si/Al ratio of 15 to 50; the second zeolite is a silicoaluminophosphate having a Si/ (Si + Al + P) ratio of 0.1 to 0.25; and the volume ratio of the first zeolite to the second zeolite (first zeolite:second zeolite) is 75:25 to 90:10.

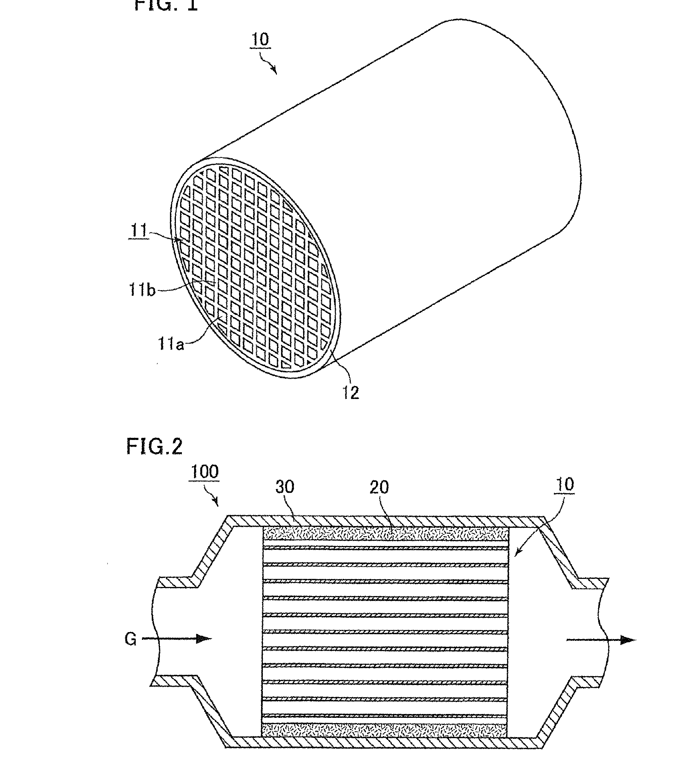

Fig. 1 shows one example of the honeycomb catalyst of the present invention. A honeycomb catalyst 10 shown in Fig. 1 includes a single honeycomb unit 11 with a plurality of through holes 11a that are arranged in parallel in a longitudinal direction and partitions 11b that are provided between the through holes 11a. A periphery coat layer 12 is formed on the outer peripheral face of the honeycomb unit 11. The honeycomb unit 11 includes a first zeolite, a second zeolite, and an inorganic binder.

In the honeycomb catalyst of the present invention, the first zeolite in the honeycomb unit is a CHA-structured aluminosilicate (CHA). The expression "CHA-structured" means "having a structure represented by a code CHA, that defines the structure of zeolite, prescribed by International Zeolite Association (IZA)". The zeolite has a crystal structure equivalent to that of naturally produced chabazite.

The CHA has a Si/Al ratio of 15 to 50, preferably 20 to 40, and more preferably 25 to 35. If the Si/Al ratio is less than 15, the Al content is large so that thermal deterioration tends to occur. If the Si/Al ratio is more than 50, the zeolite has fewer acid sites. Thus, NOx purifying performance may decrease.

The CHA has an average particle size of preferably 0.1 to 2.0 $\mu$m, more preferably 0.3 to 1.8 $\mu$m, and still more preferably 0.7 to 1.7 $\mu$m. If the CHA has an average particle size of 0.1 to 2.0 $\mu$m, the honeycomb unit has a large pore size. Thus, the honeycomb catalyst has a low capillary stress when it has absorbed water, and also has higher NOx purifying performance due to gas diffusion.

The average particle size of the CHA is the average particle size of the primary particles measured with a scanning electron microscope (SEM).

The CHA has a specific surface area of preferably 500 to 650 $m^2$/g, and more preferably 550 to 630 $m^2$/g in view of the crystal structure.

The honeycomb unit has a CHA content of preferably 40 to 75 vol%, more preferably 45 to 70 vol%, and still more preferably 50 to 65 vol%. A CHA content of less than 40 vol% reduces the NOx purifying performance. A CHA content of more than 75 vol% tends to cause damage of the honeycomb unit due to absorption or desorption of water, or thermal stress.

In the honeycomb catalyst of the present invention, the second zeolite included in the honeycomb unit is silicoaluminophosphate (SAPO). A zeolite in the narrow sense means aluminosilicate but it in the broad sense includes silicoaluminophosphate (SAPO). The broad sense of the zeolite is applied herein.

The SAPO has a Si/(Si + Al + P) ratio of 0.1 to 0.25, preferably 0.1 to 0.23, and more preferably 0.12 to 0.20. A Si/(Si + Al + P) ratio of less than 0.1 reduces the sites to be ion-exchanged with a copper ion so that the NOx purifying performance decreases. A Si/(Si + Al + P) ratio of more than 0.25 increases the structural defects so that the NOx purifying performance decreases.

Unlimited examples of the SAPO include SAPO-5, SAPO-11, and SAPO-34; two or more kinds of these may be used in combination. In particular, SAPO-34 is preferred.

The average particle size of the SAPO is preferably 1/5 to 50 times, more preferably 1/3 to 30 times the average particle size of the CHA. This enables control of the pore size of the honeycomb unit. The average particle size of the SAPO is the average particle size of the primary particles measured with a scanning electron microscope (SEM).

For example, in the case of the CHA having an average particle size of 0.1 $\mu$m, the SAPO preferably has an average particle size of 0.1 to 3.0 $\mu$m. In the case of the CHA having an average particle size of 1.5 $\mu$m, the SAPO preferably has an average particle size of 0.5 to 5.0 $\mu$m.

The SAPO has a specific surface area of preferably 200 to 500 $m^2$/g, and more preferably 220 to 450 $m^2$/g in view of the crystal structure.

The honeycomb unit has a SAPO content of preferably 5 to 25 vol%, and more preferably 8 to 20 vol%. If the SAPO content is less than 5 vol%, the CHA content is too large, which tends to cause damage of the honeycomb unit due to absorption or desorption of water, or thermal stress. If the SAPO content is more than 25 vol%, the CHA content is small, which decreases the NOx purifying performance and also tends to cause damage of the honeycomb unit due to absorption or desorption of water.

In the honeycomb catalyst of the present invention, the volume ratio of the first zeolite to the second zeolite (CHA:SAPO) is 75:25 to 90:10, preferably 78:22 to 88:12, and more preferably 80:20 to 85:15. If the volume ratio of the CHA to the SAPO is adjusted to 75:25 to 90:10, a honeycomb catalyst can be manufactured which is excellent in NOx purifying performance and is capable of suppressing damage (damage due to absorption or desorption of water, or thermal stress) of the honeycomb unit during use of the exhaust gas purifying apparatus.

In the honeycomb catalyst of the present invention, the honeycomb unit may include a zeolite other than the CHA and the SAPO to an extent not impairing the effects of the present invention.

In the honeycomb catalyst of the present invention, preferably at least one of the first zeolite (CHA) and the second zeolite (SAPO) is ion-exchanged with a copper ion; more preferably at least the first zeolite is ion-exchanged with a copper ion; and still more preferably the first zeolite and the second zeolite are ion-exchanged with a copper ion. In this case, the honeycomb unit contains a copper ion in an amount of preferably 5.5 to 7.5 g, and more preferably 6.0 to 7.5 g per liter of an apparent volume of the honeycomb unit. The above copper ion content enables not only high NOx purifying performance when the temperature of exhaust gas is low but also prevention of a decrease of the NOx purifying performance due to oxidation of ammonia when the temperature of exhaust gas is high. Thus, the honeycomb unit exerts high NOx purifying performance over the entire temperature range.

In the honeycomb catalyst of the present invention, the honeycomb unit includes the first zeolite (CHA) in an amount of preferably 150 to 250 g, and more preferably 180 to 230 g per liter of an apparent volume of the honeycomb unit. The above first zeolite content enables not only high NOx purifying performance when the temperature of exhaust gas is low but also prevention of a decrease of the NOx purifying performance due to oxidation of ammonia when the temperature of exhaust gas is high. Thus, the honeycomb unit exerts high NOx purifying performance over the entire temperature range.

In the honeycomb catalyst of the present invention, the inorganic binder included in the honeycomb unit is not particularly limited. For allowing the honeycomb catalyst to maintain sufficient strength, preferable examples of the inorganic binder include solids contained in alumina sol, silica sol, titania sol, soluble glass, sepiolite, attapulgite, or boehmite. Two or more kinds of the inorganic binders may be used in combination.

The inorganic binder content in the honeycomb unit is preferably 3 to 30 vol%, and more preferably 5 to 20 vol%. An inorganic binder content of less than 3 vol% decreases the strength of the honeycomb unit. An inorganic binder content of more than 30 vol% reduces the zeolite content in the honeycomb unit so that the NOx purifying performance decreases.

In the honeycomb catalyst of the present invention, preferably the honeycomb unit further includes at least one selected from the group consisting of an inorganic fiber, a scale-like material, a tetrapod-shaped material, and a three-dimensional needle-shaped material for increasing the strength.

The inorganic fiber included in the honeycomb unit is preferably formed of at least one selected from the group consisting of alumina, silica, silicon carbide, silica alumina, glass, potassium titanate, and aluminum borate. The scale-like material included in the honeycomb unit is preferably formed of at least one selected from the group consisting of glass, muscovite, alumina, and silica. The tetrapod-shaped material included in the honeycomb unit is preferably formed of zinc oxide. The three-dimensional needle-shaped material included in the honeycomb unit is preferably formed of at least one selected from the group consisting of alumina, silica, silicon carbide, silica alumina, glass, potassium titanate, aluminum borate, and boehmite. The above materials have high heat resistance and are not eroded when they are used as a catalyst support in the SCR system. Thus, they can maintain the effect as reinforcing materials.

The inorganic fiber included in the honeycomb unit has an aspect ratio of preferably 2 to 300, more preferably 5 to 200, and still more preferably 10 to 100. The inorganic fiber having an aspect ratio of less than 2 reduces the effect of increasing the strength of the honeycomb unit. The inorganic fiber having an aspect ratio of more than 300 causes clogging or the like of the mold during extrusion molding for forming the honeycomb unit or causes bending of the inorganic fiber to reduce the effect of increasing the strength of the honeycomb unit.

The scale-like material refers to a flat material which preferably has a thickness of 0.2 to 5.0 $\mu$m, a maximum length of 10 to 160 $\mu$m, and a ratio of the thickness to the maximum length of 3 to 250.

The tetrapod-shaped material refers to a material having a needle-shaped part extending three-dimensionally, the needle-shaped part preferably having an average needle length of 5 to 30 $\mu$m and an average diameter of 0.5 to 5.0 $\mu$m.

The three-dimensional needle-shaped material refers to a material including needle-shaped parts that are combined to each other by an inorganic compound (e.g., glass) at and near the center area of each needle-shaped part. Each needle-shaped part preferably has an average needle length of 5 to 30 $\mu$m, and an average diameter of 0.5 to 5.0 $\mu$m.

The three-dimensional needle-shaped material may include a plurality of three-dimensionally-connected needle-shaped parts. Each needle-shaped part preferably has a diameter of 0.1 to 5.0 $\mu$m, a length of 0.3 to 30.0 $\mu$m, and a ratio of the diameter to the length of 1.4 to 50.0.

The amount of the inorganic fiber, scale-like material, tetrapod-shaped material, and/or three-dimensional needle-shaped material in the honeycomb unit is preferably 3 to 50 vol%, more preferably 3 to 30 vol%, and still more preferably 5 to 20 vol%. An amount of less than 3 vol% reduces the effect of increasing the strength of the honeycomb unit. An amount of more than 50 vol% reduces the zeolite content in the honeycomb unit so that the NOx purifying performance decreases.

In the honeycomb catalyst of the present invention, the honeycomb unit may further include inorganic particles for controlling the pore size of the honeycomb unit.

Unlimited examples of the inorganic particles in the honeycomb unit include particles of alumina, titania, zirconia, silica, ceria, and magnesia. Two or more kinds of the inorganic particles may be used in combination. The inorganic particles are preferably particles of at least one selected from the group consisting of alumina, titania and zirconia, and more preferably particles of one of alumina, titania and zirconia.

The inorganic particles have an average particle size of preferably 0.1 to 5.0 $\mu$m, more preferably 0.3 to 4.5 $\mu$m, and still more preferably 0.5 to 4.0 $\mu$m. The inorganic particles having an average particle size of 0.1 to 5.0 $\mu$m enables control of the pore size of the honeycomb unit.

The average particle size of the inorganic particles is a 50% cumulative particle size (Dv50) in a particle size distribution (volumetric basis) that is obtained by measurement according to the laser diffraction and scattering method.

The honeycomb unit has an inorganic particle content of preferably 5 to 20 vol%, and more preferably 5 to 15 vol%.

In the honeycomb catalyst of the present invention, the honeycomb unit preferably has a porosity of 40 to 70%. The honeycomb unit having a porosity of less than 40% would not allow exhaust gas to easily permeate into the partitions of the honeycomb unit. Thus, the zeolite is not effectively utilized for NOx purification. The honeycomb unit having a porosity of more than 70% leads to an insufficient strength of the honeycomb unit.

The porosity of the honeycomb unit can be measured by the Archimedes method.

In the honeycomb catalyst of the present invention, a cross section of the honeycomb unit perpendicular to the longitudinal direction preferably has an aperture ratio of 50 to 75%. If the cross section of the honeycomb unit perpendicular to the longitudinal direction has an aperture ratio of less than 50%, the zeolite is not effectively utilized for NOx purification. If the cross section of the honeycomb unit perpendicular to the longitudinal direction has an aperture ratio of more than 75%, the honeycomb unit has an insufficient strength.

In the honeycomb catalyst of the present invention, the cross section of the honeycomb unit perpendicular to the longitudinal direction preferably has a through hole density of 31 to 155 pcs/cm$^2$. If the through hole density of the cross section of the honeycomb unit perpendicular to the longitudinal direction is less than 31 pcs/cm$^2$, the zeolite does not easily contact with exhaust gas so that the NOx purifying performance decreases. If the through hole density of the cross section of the honeycomb unit perpendicular to the longitudinal direction is more than 155 pcs/cm$^2$, the honeycomb catalyst has a higher pressure loss.

In the honeycomb catalyst of the present invention, the partitions in the honeycomb unit have a thickness of preferably 0.1 to 0.4 mm, and more preferably 0.1 to 0.3 mm. If the partitions in the honeycomb unit have a thickness of less than 0.1 mm, the honeycomb unit has a lower strength. If the partitions in the honeycomb unit have a thickness of more than 0.4 mm, exhaust gas does not easily permeate into the partitions of the honeycomb unit. Thus, the zeolite is not effectively utilized for NOx purification.

In the case where an outer periphery coat layer is formed on the honeycomb unit in the honeycomb catalyst of the present invention, the outer periphery coat layer preferably has a thickness of 0.1 to 2.0 mm. The outer periphery coat layer having a thickness of less than 0.1 mm does not produce a sufficient effect of increasing the strength of the honeycomb catalyst. The outer periphery coat layer having a thickness of more than 2.0 mm reduces the zeolite content per unit volume of the honeycomb catalyst so that the NOx purifying performance decreases.

The shape of the honeycomb catalyst of the present invention is not limited to cylindrical but may be a polygonal prism, an elliptical prism, an oval prism, a round-chamfered polygonal prism (e.g., round-chamfered triangular pillar), or the like.

In the honeycomb catalyst of the present invention, the shape of the through hole is not limited to a quadrangular prism but may be a triangular prism, a hexagonal prism, or the like.

The following will describe one example of a method for manufacturing the honeycomb catalyst 10 shown in Fig. 1.

First, a material paste that includes a first zeolite, a second zeolite, an inorganic binder, and further optionally at least one selected from the group consisting of an inorganic fiber, a scale-like material, a tetrapod-shaped material, and a three-dimensional needle-shaped material is extrusion molded to manufacture a round pillar-shaped honeycomb molded body with a plurality of through holes that are arranged in parallel in a longitudinal direction and partitions that are provided between the through holes.

The material paste may contain any inorganic binder. Examples of the inorganic binder include alumina sol, silica sol, titania sol, soluble glass, sepiolite, attapulgite, and boehmite; two or more kinds of these may be used in combination.

The material paste may further optionally contain additives such as an organic binder, a dispersing medium, or a molding aid.

The organic binder is not particularly limited. Examples thereof include methyl cellulose, carboxyl methyl cellulose, hydroxy ethyl cellulose, polyethylene glycol, phenolic resin, and epoxy resin; two or more kinds of these may be used in combination. The amount of the organic binder to be added is preferably 1 to 10% of a total mass of the zeolite, inorganic particles, inorganic binder, inorganic fiber, scale-like material, tetrapod-shaped material, and three-dimensional needle-shaped material.

The dispersing medium is not particularly limited. Examples thereof include organic solvents (e.g., water, benzene) and alcohols (e.g., methanol); two or more kinds of these may be used in combination.

The molding aid is not particularly limited. Examples thereof include ethylene glycol, dextrin, fatty acids, fatty acid soaps, and poly alcohols; two or more kinds of these may be used in combination.

The material paste may further optionally contain a pore-forming material.

The pore-forming material is not particularly limited. Examples thereof include polystyrene particles, acrylic particles, and starch; two or more kinds of these may be used in combination. In particular, polystyrene particles are preferred.

The pore size distribution of the partitions can be adjusted within a predetermined range by controlling the particle sizes of the CHA and the pore-forming material.

For example, in the case of the CHA having an average particle size of 0.1 $\mu$m, a pore-forming material having an average particle size of 0.1 to 3 $\mu$m is added in an amount of 10 to 30 vol% of the amount of the CHA to allow the partitions to have an average pore size of 0.05 to 0.2 $\mu$m. In the case of the CHA having an average particle size of 1.2 $\mu$m, a pore-forming material is not necessarily added.

The pore size distribution of the partitions can be adjusted within a predetermined range by controlling the particle sizes of the CHA and the SAPO even without adding the pore-forming material.

The material paste may be preferably prepared by mixing with a mixer, an attritor, or the like, or by kneading with a kneader, or the like.

Next, the honeycomb molded body is dried using a drier, such as a microwave drier, a hot air drier, a dielectric drier, a reduced pressure drier, a vacuum drier, or a freeze drier, to thereby manufacture a honeycomb dried body.

The honeycomb dried body is degreased to manufacture a honeycomb degreased body. The condition for the degreasing may be appropriately determined depending on the kinds and amounts of organic substances in the honeycomb dried body but is preferably under a temperature of 200 to 500°C for a period of 2 to 6 hours.

Next, the honeycomb degreased body is fired to manufacture a round pillar-shaped honeycomb unit 11. The firing temperature is preferably 600 to 1000°C, and more preferably 600 to 800°C. A firing temperature of lower than 600°C fails to proceed the sintering to decrease the strength of the honeycomb unit 11. A firing temperature of higher than 1000°C leads to excessive sintering to reduce reaction sites of the zeolite.

Thereafter, a paste for forming an outer periphery coat layer is applied to the outer peripheral face, except for both end faces, of the round pillar-shaped honeycomb unit 11.

The paste for forming an outer periphery coat layer is not particularly limited. Examples thereof include mixtures of an inorganic binder and inorganic particles, mixtures of an inorganic binder and an inorganic fiber, and mixtures of an inorganic binder, inorganic particles, and an inorganic fiber.

The paste for forming an outer periphery coat layer may contain any inorganic binder. The inorganic binder is added as silica sol, alumina sol, or the like but is preferably added as silica sol. Two or more kinds of the inorganic binders may be used in combination.

The paste for forming an outer periphery coat layer may contain any inorganic particles. Examples of the inorganic particles include particles of an oxide such as zeolite, eucryptite, alumina, and silica; particles of a carbide such as silicon carbide; and particles of a nitride such as silicon nitride and boron nitride. Two or more kinds of the inorganic particles may be used in combination. As eucryptite has a similar coefficient of thermal expansion to that of the honeycomb unit, particles of eucryptite are preferred.

The paste for forming an outer periphery coat layer may contain any inorganic fiber. Examples of the inorganic fiber include silica alumina fiber, mullite fiber, alumina fiber, and silica fiber; two or more kinds of these may be used in combination. In particular, alumina fiber is preferred.

The paste for forming an outer periphery coat layer may further contain an organic binder.

The paste for forming an outer periphery coat layer may contain any organic binder. Examples of the organic binder include polyvinyl alcohol, methyl cellulose, ethyl cellulose, and carboxyl methyl cellulose; two or more kinds of these may be used in combination.

The paste for forming an outer periphery coat layer may further contain balloons (i.e. fine hollow spheres) of oxide-based ceramic, a pore-forming material, or the like.

The paste for forming an outer periphery coat layer may contain any balloon. Examples of the balloon include an alumina balloon, a glass micro balloon, a shirasu balloon, a fly ash balloon, and a mullite balloon; two or more kinds of these may be used in combination. In particular, an alumina balloon is preferred.

The paste for forming an outer periphery coat layer may contain any pore-forming material. Examples of the pore-forming material include spherical acrylic particles and graphite; two or more kinds of these may be used in combination.

Next, the honeycomb unit 11 with the paste for forming an outer periphery coat layer applied thereto is dried to solidify the paste to thereby manufacture a round pillar-shaped honeycomb catalyst 10. In the case where the paste for forming an outer periphery coat layer contains an organic binder, degreasing is preferably performed. The condition for the degreasing may be appropriately determined depending on the kinds and amounts of the organic substances but is preferably under a temperature of 500°C for a period of one hour.

The honeycomb unit 11 or the honeycomb catalyst 10 may be immersed in an aqueous solution containing a copper ion so that the zeolite is ion-exchanged with a copper ion. Alternatively, the material paste containing a zeolite that is ion-exchanged with a copper ion may be used.

Fig. 2 shows one example of the exhaust gas purifying apparatus of the present invention. An exhaust gas purifying apparatus 100 shown in Fig. 2 can be manufactured by canning the honeycomb catalyst 10 in a metal container (shell) 30, the honeycomb catalyst 10 having a holding sealing material 20 on the outer periphery thereof. The exhaust gas purifying apparatus 100 includes an injector (not illustrated), such as injection nozzle, inside a pipe (not illustrated) on an upstream of the honeycomb catalyst 10 with respect to the direction in which exhaust gas flows (in Fig. 2, G indicates exhaust gas, and arrows indicate flows of exhaust gas). The injector injects ammonia or a compound that generates ammonia when decomposed. The injector supplies ammonia into exhaust gas flowing through the pipe. Thus, NOx contained in exhaust gas is reduced by the zeolite included in the honeycomb unit 11.

The compound that generates ammonia when decomposed may be any compound that can generate ammonia when it is hydrolyzed inside the pipe. Preferably, the compound is urea water as it has excellent storage stability.

Urea water heated by exhaust gas inside the pipe is hydrolyzed to generate ammonia.

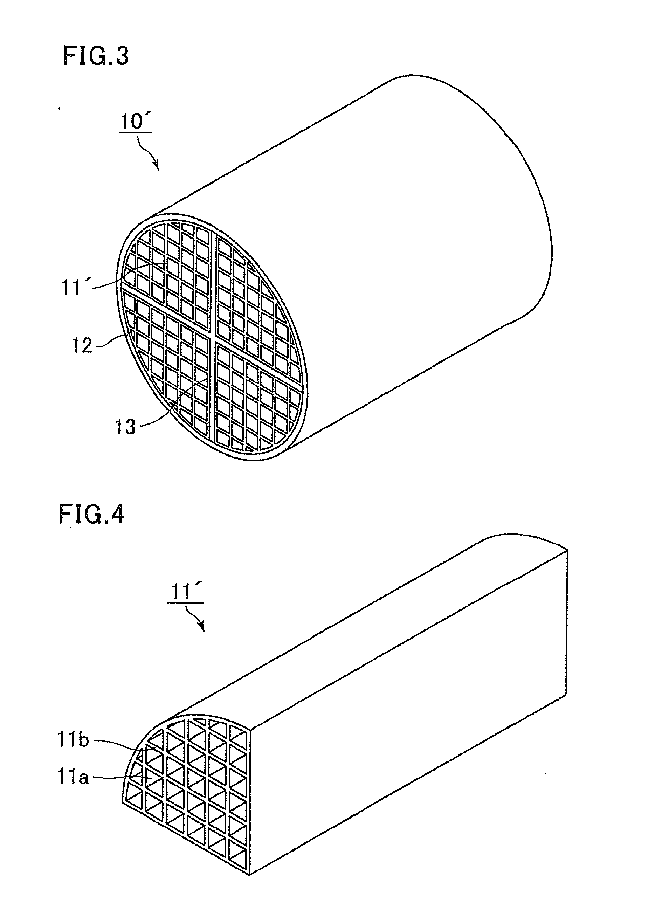

Fig. 3 shows another example of the honeycomb catalyst of the present invention. A honeycomb catalyst 10' in Fig. 3 has the same structure as that of the honeycomb catalyst 10, except that it includes a plurality of honeycomb units 11' that are combined with one another with adhesive layers 13 provided between the honeycomb units 11'. Each honeycomb unit 11' is provided with a plurality of through holes 11a that are arranged in parallel in the longitudinal direction and partitions 11b that are provided between the through holes 11a (see Fig. 4).

The cross section of each honeycomb unit 11' perpendicular to the longitudinal direction has a cross-sectional area of preferably 10 to 200 cm$^2$. If the cross-sectional area is less than 10 cm$^2$, the honeycomb catalyst 10' has a higher pressure loss. If the cross-sectional area is more than 200 cm$^2$, the honeycomb units 11' are hardly combined with one another.

The honeycomb unit 11' has the same structure as that of the honeycomb unit 11, except for the cross sectional area of the cross section perpendicular to the longitudinal direction.

The adhesive layers 13 preferably have a thickness of 0.1 to 3.0 mm. If the adhesive layers 13 have a thickness of less than 0.1 mm, the bonding strength between the honeycomb units 11' becomes insufficient. If the adhesive layers 13 have a thickness of more than 3.0 mm, the honeycomb catalyst 10' has a higher pressure loss, or cracks occur in the adhesive layers.

The following will describe one example of a method for manufacturing the honeycomb catalyst 10' shown in Fig. 3.

First, honeycomb units 11' having sectorial prism shapes are manufactured in the same manner as the method for manufacturing the honeycomb unit 11 that forms the honeycomb catalyst 10. The adhesive layer paste is applied to the outer peripheral faces of the honeycomb units 11' except for the arc faces. Then, the honeycomb units 11' are bonded to each other and dried to solidify the paste to thereby manufacture an aggregate of the honeycomb units 11'.

The adhesive layer paste is not particularly limited. Examples of the adhesive layer paste include mixtures of an inorganic binder and inorganic particles, mixtures of an inorganic binder and an inorganic fiber, and mixtures of an inorganic binder, inorganic particles, and an inorganic fiber.

The adhesive layer paste may contain any inorganic binder. The inorganic binder is added as silica sol, alumina sol, or the like but is preferably added as silica sol. Two or more kinds of the inorganic binders may be used in combination.

The adhesive layer paste may contain any inorganic particles. Examples of the inorganic particles include particles of an oxide such as zeolite, eucryptite, alumina, and silica; particles of a carbide such as silicon carbide; and particles of a nitride such as silicon nitride and boron nitride. Two or more kinds of the inorganic particles may be used in combination. As eucryptite has a similar coefficient of thermal expansion to that of the honeycomb unit, particles of eucryptite are preferred.

The adhesive layer paste may contain any inorganic fiber. Examples of the inorganic fiber include silica alumina fiber, mullite fiber, alumina fiber, and silica fiber; two or more kinds of these may be used in combination. In particular, alumina fiber is preferred.

The adhesive layer paste may further contain an organic binder.

The adhesive layer paste may contain any organic binder. Examples of the organic binder include polyvinyl alcohol, methyl cellulose, ethyl cellulose, and carboxyl methyl cellulose; two or more kinds of these may be used in combination.

The adhesive layer paste may further contain balloons (i.e. fine hollow spheres) of oxide-based ceramic, a pore-forming material, or the like.

The adhesive layer paste may contain any balloon. Examples of the balloon include an alumina balloon, a glass micro balloon, a shirasu balloon, a fly ash balloon, and a mullite balloon; two or more kinds of these may be used in combination. In particular, an alumina balloon is preferred.

The adhesive layer paste may contain any pore-forming material. Examples of the pore-forming material include spherical acrylic particles and graphite; two or more kinds of these may be used in combination.

In order to improve the roundness, the aggregate of the honeycomb units 11' is optionally machined and ground into a round pillar-shaped aggregate of the honeycomb units 11'.

Thereafter, a paste for forming an outer periphery coat layer is applied to the outer peripheral face, except for both end faces, of the round pillar-shaped aggregate of the honeycomb units 11'.

The paste for forming an outer periphery coat layer may be the same as or different from the adhesive layer paste.

Next, the round pillar-shaped aggregate of the honeycomb units 11' with the paste for forming an outer periphery coat layer applied thereto is dried to solidify the paste to thereby manufacture a round pillar-shaped honeycomb catalyst 10'. In the case where the adhesive layer paste and/or the paste for forming an outer periphery coat layer contain an organic binder, preferably degreasing is performed. The condition for the degreasing may be appropriately determined depending on the kinds and the amounts of the organic substances but is preferably under a temperature of 500°C for a period of one hour.

The honeycomb catalyst 10' is formed of four pieces of the honeycomb units 11' which are bonded to one another with the adhesive layers 13 provided between the honeycomb units 11'. The number of the honeycomb units forming the honeycomb catalyst is not particularly limited. For example, a round pillar-shaped honeycomb catalyst may be formed of 16 pieces of quadrangular prism-shaped honeycomb units which are bonded to one another with the adhesive layers provided between the honeycomb units.

The honeycomb catalysts 10 and 10' may not have the outer periphery coat layer 12.

As mentioned earlier, in the honeycomb catalyst of the present invention, a honeycomb unit formed mainly of a CHA as the first zeolite enables to improve the NOx purifying performance. Moreover, the addition of a SAPO as the second zeolite for forming the honeycomb unit can reduce the stress from absorption or desorption of water in the entire honeycomb unit. Specifically, controlling the volume ratio of the CHA to the SAPO to 75:25 to 90:10 enables to provide a honeycomb catalyst that is excellent in NOx purifying performance and is capable of suppressing damage (damage due to absorption or desorption of water and thermal stress) of the honeycomb unit during use of the exhaust gas purifying apparatus.

EXAMPLES

The present invention is illustrated by, but not limited to, examples which specifically describe the present invention.

[Example 1]

A material paste 1 was prepared by mixing a CHA (27% by mass) having an average particle size of 0.1 $\mu$m as a first zeolite, a SAPO (8% by mass) having an average particle size of 3.0 $\mu$m as a second zeolite, boehmite (7% by mass) as an inorganic binder, a glass fiber (7% by mass) having an average fiber diameter of 6.5 $\mu$m and an average fiber length of 100 $\mu$m, polystyrene particles (7% by mass) having an average particle size of 0.8 $\mu$m as a pore-forming material, methyl cellulose (6% by mass), a fatty acid soap (4% by mass) as a molding aid, and ion exchange water (34% by mass). The first zeolite used was a copper ion-exchanged CHA having a specific gravity of 2.02, a ratio of Si/Al of 32, and a specific surface area of 600 $m^2$/g. The second zeolite used was a copper ion-exchanged SAPO having a specific gravity of 2.53, a ratio of Si/(Si + Al + P) of 0.17, and a specific surface area of 223 $m^2$/g.

The volume ratio of the first zeolite to the second zeolite (CHA:SAPO) was 80:20 in Example 1.

Then, the material paste 1 was extrusion molded with an extruder into a square prism-shaped honeycomb molded body. The honeycomb molded body was dried with a vacuum microwave dryer at a power output of 4.5 kW for 7 minutes under a reduced pressure of 6.7 kPa, followed by degreasing and firing at 700°C for 2 hours, so that a honeycomb fired body (honeycomb unit 11') was manufactured. The honeycomb unit 11' is in a square prism shape having a length of a side of 38 mm and a length in the longitudinal direction of 150 mm. The honeycomb unit 11' is provided with through holes 11a at a density of 124 pcs/$cm^2$ and partitions 11b each having a thickness of 0.20 mm.

Moreover, the honeycomb unit 11' includes the first zeolite and the second zeolite in a total amount of 254 g and a copper ion in an amount of 9. 4 g per liter of an apparent volume of the honeycomb unit 11'.

[Comparative Example 1]

A honeycomb unit 11' was manufactured in the same manner as in Example 1, except that the volume ratio of the first zeolite to the second zeolite (CHA:SAPO) was changed to 70:30.

[Comparative Example 2]

A honeycomb unit 11' was manufactured in the same manner as in Example 1, except that the volume ratio of the first zeolite to the second zeolite (CHA:SAPO) was changed to 100:0. In other words, no second zeolite (SAPO) was used in Comparative Example 2.

[Measurement of NOx purification rate]

A cylindrical test sample having a diameter of 1 inch and a length of 3 inches was cut out of each of the honeycomb units manufactured in Example 1 and Comparative Examples 1 and 2 with a diamond cutter. In a state where an imitation gas of 200°C or 525°C was allowed to flow into each test sample at a space velocity (SV) of 40000/hr (200°C) or 100000/hr (525°C), the amount of NOx flowing out of the test sample was measured with a catalyst evaluation apparatus (SIGU-2000/MEXA-6000FT, manufactured by Horiba Ltd.). The NOx purification rate (%) that is expressed by the following formula:

$$(Inflow\ of\ NOx - Outflow\ of\ NOx)/(Inflow\ of\ NOx) \times 100$$

was calculated. Table 1 shows the calculation result. The imitation gas of 200°C contains the following components: nitric oxide (260 ppm), nitrogen dioxide (90 ppm), ammonia (350 ppm), oxygen (10%), carbon dioxide (5%), water (5%), and nitrogen (balance) ; and the imitation gas of 525°C contains the following components: nitric oxide (315 ppm), nitrogen dioxide (35 ppm), ammonia (385 ppm),oxygen (10%), carbon dioxide (5%), water (5%), and nitrogen (balance).

Table 1

|  | CHA:SAPO (Volume ratio) | NOx purification rate [%] | |
| --- | --- | --- | --- |
|  |  | 200°C | 525°C |
| Example 1 | 80:20 | 94 | 80 |
| Comparative Example 1 | 70:30 | 96 | 82 |
| Comparative Example 2 | 100:0 | 94 | 80 |

Table 1 indicates that all the honeycomb units have a rate of purifying the NOx of 200°C of as high as approximately 95% and a rate of purifying the NOx of 525°C of as high as approximately 80%.

[Measurement of coefficient of thermal expansion]

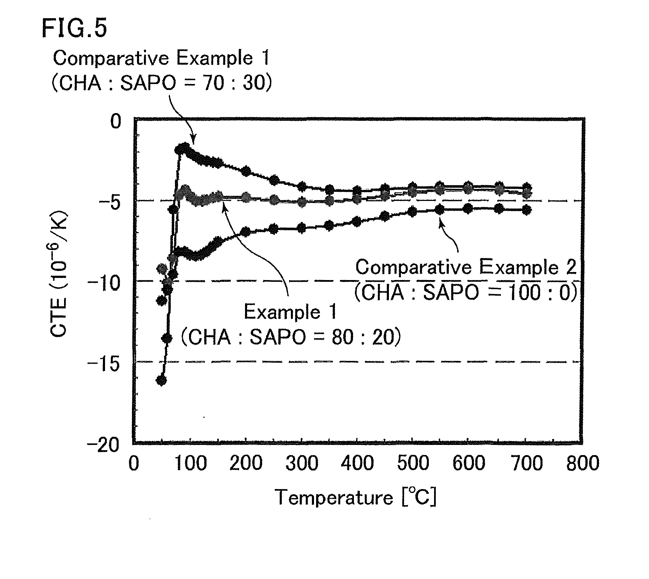

A square prism-shaped measurement sample having a side length of 5 mm and a height of 25 mm was cut out of each of the honeycomb units manufactured in Example 1 and Comparative Examples 1 and 2 with a diamond cutter. The samples were dried at 200°C for 2 hours and weighed. Then, the measurement samples were allowed to stand in a steam atmosphere until they had a water absorption of 10%.
Next, the measurement samples were heated from 50°C to 700°C at a temperature rising rate of 10°C/min, and then cooled to 50°C at a temperature decreasing rate of 10°C/min. The coefficient of thermal expansion (CTE) of the honeycomb unit in a radial direction at every temperature increment or decrement of 10°C was measured with a thermal expansion meter (NETZSCH DIL402C, manufactured by Bruker Japan Co., Ltd.). The measurement was performed in helium (He) flowing at a rate of 100 mL/min. Fig. 5 shows the measurement result.
Fig. 5 indicates that the honeycomb unit in Example 1, in which the proportion of the SAPO to the total amount of the CHA and the SAPO is 20 vol%, shows little change in the coefficient of thermal expansion over the entire temperature range. In contrast, the honeycomb unit in Comparative Example 1, in which the proportion of the SAPO to the total amount of the CHA and the SAPO is 30 vol%, and the honeycomb unit in Comparative Example 2 which includes no SAPO show a large change in the coefficient of thermal expansion at around 80 to 100°C. The result suggests that, damage of the honeycomb units due to absorption or desorption of water can be suppressed by controlling the volume ratio between the CHA and the SAPO within an appropriate range.

[Thermal cycling test]

A thermal cycling test was performed on the honeycomb units manufactured in Example 1 and Comparative Examples 1 and 2. In the test, each honeycomb unit was subjected to a cycle of heating to 700°C and then cooling to 200°C, and this cycle was repeated five times in total.
The result of the thermal cycling test was as follows: the honeycomb units were not damaged in the honeycomb unit in Example 1, in which the proportion of the SAPO to the total amount of the CHA and the SAPO is 20 vol%, and in the honeycomb unit in Comparative Example 1, in which the proportion of the SAPO to the total amount of the CHA and the SAPO is 30 vol%. In contrast, the honeycomb unit was damaged in the honeycomb unit in Comparative Example 2 which includes no SAPO. Thus, the result suggests that the addition of the CHA and the SAPO for forming the honeycomb unit enables to suppress damage of the honeycomb unit due to thermal stress.
Hence, the honeycomb catalyst of the present invention is considered to have excellent NOx purifying performance and to be capable of suppressing damage (damage due to absorption or desorption of water and thermal stress) of the honeycomb unit during use of the exhaust gas purifying apparatus.
The essential feature of the honeycomb catalyst of the present invention is to include a honeycomb unit with a plurality of through holes that are arranged in parallel in a longitudinal direction and partitions that are provided between the through holes, wherein the honeycomb unit includes a first zeolite, a second zeolite, and an inorganic binder; the first zeolite is a CHA-structured aluminosilicate having a Si/Al ratio of 15 to 50; the second zeolite is a silicoaluminophosphate having a Si/(Si + Al + P) ratio of 0.1 to 0.25; and the volume ratio of the first zeolite to the second zeolite (first zeolite:second zeolite) is 75:25 to 90:10.
Desired effects can be obtained by appropriately combining the essential feature with the various structures (for example, the structure of the first zeolite, the structure of the second zeolite, the structure of the inorganic binder, the structure of the honeycomb unit, the conditions for manufacturing the honeycomb catalyst, the structure of the exhaust gas purifying apparatus, or the like) mentioned in detail in the above description of the present invention.

REFERENCE SIGNS LIST

10, 10'   Honeycomb catalyst
11, 11'   Honeycomb unit
11a   Through hole
11b   Partition
12   Outer periphery coat layer
13   Adhesive layer
20   Holding sealing material
30   Metal container
100   Exhaust gas purifying apparatus
G   Exhaust gas

**Claims**

1. A honeycomb catalyst comprising
a honeycomb unit with a plurality of through holes that are arranged in parallel in a longitudinal direction and partitions that are provided between the through holes,
wherein the honeycomb unit comprises a first zeolite, a second zeolite, and an inorganic binder;
the first zeolite is a CHA-structured aluminosilicate having a Si/Al ratio of 15 to 50;
the second zeolite is a silicoaluminophosphate having a Si/(Si + Al + P) ratio of 0.1 to 0.25; and
the volume ratio of the first zeolite to the second zeolite (first zeolite:second zeolite) is 75:25 to 90:10.

2. The honeycomb catalyst according to claim 1,
wherein the average particle size of the first zeolite is 0.1 to 2.0 μm.

3. The honeycomb catalyst according to claim 1 or 2,
wherein the average particle size of the second zeolite is 1/5 to 50 times the average particle size of the first zeolite.

4. The honeycomb catalyst according to any one of claims 1 to 3,
   wherein at least one of the first zeolite and the second zeolite is ion-exchanged with a copper ion.

5. The honeycomb catalyst according to claim 4,
   wherein the honeycomb unit contains the copper ion in an amount of 5.5 to 7.5 g per liter of an apparent volume of the honeycomb unit.

6. The honeycomb catalyst according to any one of claims 1 to 5,
   wherein the honeycomb unit comprises the first zeolite in an amount of 150 to 250 g per liter of an apparent volume of the honeycomb unit.

7. The honeycomb catalyst according to any one of claims 1 to 6,
   wherein the honeycomb unit further comprises at least one selected from the group consisting of an inorganic fiber, a scale-like material, a tetrapod-shaped material, and a three-dimensional needle-shaped material.

8. An exhaust gas purifying apparatus comprising the honeycomb catalyst according to any one of claims 1 to 7.

FIG. 1

FIG.2

FIG.3

10'

11'

12

13

FIG.4

11'

11b

11a

# FIG.5

Comparative Example 1
(CHA : SAPO = 70 : 30)

Comparative Example 2
(CHA : SAPO = 100 : 0)

Example 1
(CHA : SAPO = 80 : 20)

CTE ($10^{-6}$/K) vs Temperature [°C]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011061835 A

- US 7601662 B